# EUROPEAN PATENT APPLICATION

(11) **EP 1 985 685 A1**
(43) Date of publication of application: **29.10.2008**
(21) Application number: 08150430.0
(22) Date of filing: 18.01.2008
(51) Int. Cl.: C10L 1/08, C10L 1/224

(54) **Middle distillate fuels with a sustained conductivity benefit**

(30) Priority: 19.04.2007 US 788199
(71) Applicant: Afton Chemical Corporation, Richmond, VA 23219 (US)
(72) Inventor: BRENNAN, Timothy J., Glen Allen, VA 23060 (US); KULINOWSKI, Alexander M., Mechanicsville, VA 23116 (US)
(74) Representative: Mathys & Squire LLP

(57) **Abstract**

The disclosure provides conductivity improving concentrates and methods for improving conductivity and reducing risks associated with static discharge in middle distillate fuel compositions, particularly ultra-low sulfur diesel fuels. The conductivity improvement is provided in the presence of a basic nitrogen component and is sustained for an extended period, thus permitting the antistatic agent to be pre-blended with in an additive concentrate or to the fuel well in advance of the time when the improved conductivity might actually be needed, such as when the fuel is dispensed into a bulk container.

## Description

### FIELD OF THE DISCLOSURE

The disclosure relates to compositions and methods for improving the conductivity of middle distillate fuel compositions, particularly diesel fuels and most particularly low sulfur and ultra-low sulfur diesel fuels.

### BACKGROUND OF THE DISCLOSURE

Certain middle distillate fuel compositions, particularly diesel fuels, are capable of generating static electricity, particularly when moving rapidly, such as when the fuel is being dispensed into a tanker or other bulk container or vessel. While diesel fuels are not very volatile, the tankers used to transport diesel fuels are also used to transport gasoline, kerosene and other more volatile and flammable liquids. Even after the more volatile fuel is dispensed from the tanker, the vapors may still be present and pose a risk of fire or explosion from a spark generated by the discharge of static electricity from the fuel composition.

These risks have become more acute in recent years with the increased popularity and use of low sulfur fuels and even more acute in recent months with the introduction of ultra-low sulfur diesel fuels. The process used to remove the sulfur from the fuels also decreases the concentration of other polar compounds in the fuel, which in turn reduces the ability of the fuel to dissipate a static charge.

To mitigate the risks of fire or explosion with low and ultra-low sulfur fuels, it has become common to add a conductivity improver to the fuel at or prior to the point of dispensing the fuel into a bulk container. The conductivity improver, as the name suggests, improves the conductivity of the fuel, thus permitting any static charge built up during high volume transport of the fuel to safely dissipate without generating a spark. Conductivity improvers are also known as antistatic agents.

The most common type of conductivity improver or antistatic agent used in fuels, particularly diesel fuels, has been the Stadis® brand of antistatic agents sold by Innospec Fuel Specialties, LLC, Newark, Delaware. However, the Stadis® brand of antistatic agents contains sulfur. Adding the Stadis® antistatic agents to the diesel fuel thus reduces the benefits of using an ultra-low sulfur fuel. In addition, these antistatic agents are quite expensive.

Moreover, sulfur-containing antistatic agents present another problem when used with additive concentrates or fuels that contain basic nitrogen. Specifically, Applicants have observed that the conductivity improvement delivered by a sulfur-containing antistatic agent dissipates very rapidly when used in additive concentrates or fuel mixtures containing basic nitrogen. Even when used at concentrations of 8 ppm, the conductivity measurement drops precipitously to less than 50 pS/m within a matter of days. This is disadvantageous because it prevents pre-blending of these antistatic agents into additive concentrates that contain basic nitrogen. Many components of a typically fuel additive concentrate include nitrogen-containing compounds, such as dispersants, detergents, cetane number improvers and the like. As a result, it is often necessary to add the sulfur-containing antistatic agents separately from the other components of the additive concentrate. Thus, these types of antistatic agents must be kept in a separate tank at the depot and added separately to the fuel. Accordingly, these types of antistatic agent, apart from their inherent additional cost, require additional costs and complexity in terms of storage, handling and dispensing.

Therefore, there is a need for compositions and methods to address the buildup and discharge of static electricity in middle distillate fuel compositions, particularly those containing basic nitrogen compounds.

### SUMMARY OF THE EMBODIMENTS

In an embodiment, the disclosure provides an additive concentrate comprising a basic nitrogen component pre-blended with an antistatic agent

In an embodiment, the disclosure provides a middle distillate fuel composition comprising a basic nitrogen component and an antistatic agent, wherein the conductivity of said fuel composition declines by no more than 50% over a period of 3 days when stored at 50°C.

In an embodiment, the disclosure provides a method comprising the step of adding an antistatic agent to a middle distillate fuel composition, wherein the conductivity in said fuel composition declines by no more than 50% over a period of 3 days when stored at 50°C.

Additional objects and advantages of the disclosure will be set forth in part in the description which follows, and/or can be learned by practice of the disclosure. The objects and advantages of the disclosure will be realized and attained by means of the elements and combinations particularly pointed out in the appended claims.

It is to be understood that both the foregoing general description and the following detailed description are exemplary and explanatory only and are not restrictive of the disclosure, as claimed.

### BRIEF DESCRIPTION OF THE FIGURES

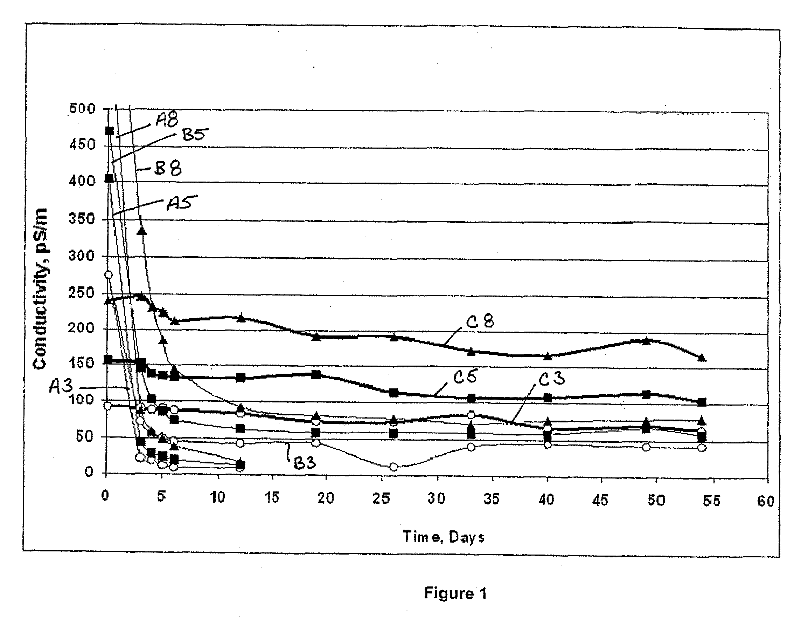

Figure 1 is a graph illustrating the relationship of conductivity versus time in an ultra-low sulfur diesel fuel.

### DETAILED DESCRIPTION OF THE EMBODIMENTS

By improving the conductivity of the fuel, the fuel is better able to dissipate a static charge that might be generated by high volume transportation of the fuel, such as when the fuel is dispensed into a tanker truck or rail car. Because the fuel is better able to dissipate a static charge, the fuel is less likely to generate a spark, which may ignite volatile fumes that might be present in the area, either from the fuel itself or from previous fuels that may have been transported in the tanker.

The present embodiments are based on the surprising discovery by Applicants that certain antistatic agents, specifically those that are essentially free of sulfone moieties, sulfonic acid moieties, and salts thereof, provide a sustained conductivity benefit to a diesel fuel composition, even if the composition contains basic nitrogen.

The phrase "sustained conductivity benefit" is used to indicate that the conductivity of the fuel does not decline by more than 50% from its initial measure within 3 days of adding the antistatic agent and the basic nitrogen component to the diesel fuel when stored at 50°C. More preferably, the conductivity does not decline by more than 30% within that 3 day period. Still more preferably, the conductivity measure declines by no more than 30% for a period of at least 7 days after introducing the antistatic agent and the basic nitrogen component to the fuel. In some embodiments, the conductivity measure is still at least 50% of its initial measure after 21 days following the admixture of the antistatic agent and the basic nitrogen component.

The term "conductivity benefit" is used to indicate that the conductivity of the fuel is sufficient to provide a conductivity at least 25 pS/m at the time and temperature of delivery of the fuel.

The present embodiments are particularly suited for middle distillate fuel compositions. Middle distillate fuel compositions include, but are not limited to, jet fuels, diesel fuels, and kerosene. In an embodiment, the fuel is a low-sulfur fuel having less than about 500 ppm sulfur, preferably less than about 350 ppm of sulfur. In an embodiment, the fuel is an ultra-low sulfur diesel fuel or ultra-low sulfur kerosene. Ultra-low sulfur fuels are generally considered to have no more than about 15 ppm of sulfur, more preferably no more than 10 ppm of sulfur. The term "diesel fuel" is generally considered to be a generic term encompassing diesel, biodiesel, biodiesel-derived fuel, synthetic diesel and mixtures thereof. All disclosures herein to parts per million "ppm" are by mass unless otherwise indicated.

The present disclosure encompasses jet fuels, although these are conventionally not regarded as "low-sulfur" or "ultra-low sulfur" fuels since their sulfur levels can be comparatively quite high. Nevertheless, jet fuels may also benefit from the conductivity improvement of the present embodiments regardless of their sulfur content.

The terms "combustion system" and "apparatus" used in the disclosure connote any apparatus, machine or motor that utilize, in whole or in part, a combustible fuel to generate power. The terms include, for example, diesel-electric hybrid vehicle, a gasoline-electric hybrid vehicle, a two-stroke engine, any and all burners or combustion units, including for example, stationary burners, waste incinerators, diesel fuel burners, diesel fuel engines, automotive diesel engines, gasoline fuel burners, gasoline fuel engines, power plant generators, and the like. The hydrocarbonaceous fuel combustion systems that may benefit from the present disclosure include all combustion units, systems, devices, and/or engines that bum fuels. The term "combustion system" also encompasses internal and external combustion devices, machines, engines, turbine engines, jet engines, boilers, incinerators, evaporative burners, plasma burner systems, plasma arc, stationary burners, and the like which can combust or in which can be combusted a hydrocarbonaceous fuel.

The middle distillate fuel compositions contemplated by the present disclosure can contain other additives. Some of these additives are more commonly added directly at the refinery while the others form part of an additive concentrate typically added at the point of loading with the tanker. Examples of conventional fuel additives which may be used include antioxidants (such as phenolics e.g., 2,6-di-tert-butylphenol, or phenylenediamines such as N,N'-di-sec-butyl-p-phenylenediamine), fuel stabilizers, dispersants, antihaze agents, antifoams, cetane number improvers, combustion improvers, corrosion inhibitors, biocides, dyes, cold flow improvers (e.g., polyesters), smoke reducers, catalyst life enhancers and demulsifiers, lubricity agents and other standard or useful fuel additives.

Examples of common additives for middle distillate fuel compositions include non polar organic solvents such as aromatic and aliphatic hydrocarbons, including toluene, xylene and white spirit, e.g. those sold under the Trade Mark "SHELLSOL" by the Royal Dutch/Shell Group or AROMATIC 100 and AROMATIC 150 available from ExxonMobil; polar organic solvents, in particular, alcohols generally aliphatic alcohols e.g. 2 ethylhexanol, decanol and isotridecanol. Anti-foaming agents include e.g. the polyether-modified polysiloxanes commercially available as TEGOPREN^{™} 5851 (ex Th. Goldschmidt) Q 25907 (ex Dow Coming) or RHODORSIL^{™} (ex Rhone Poulenc). Cetane number improvers (also called ignition improvers) include alkyl nitrates (e.g. 2-ethylhexyl nitrate and cyclohexyl nitrate). Anti-rust agents include polyhydric alcohol esters of succinic acid derivatives (e.g. commercially sold by Rhein Chemie, Mannheim, Germany as RC 4801^{™}, or by Afton Chemical Corporation as HiTEC® 536). Suitable metal deactivators include salicylic acid derivatives, e.g., N,N'-disalicylidene-1,2-propane diamine.

Particularly preferred lubricity additives are derived from hydrocarbyl-substituted succinic anhydride and a hydroxyamine. These additives enhance the lubricating properties of the fuel without degrading other performance features of the fuel, such as detergency, ignition quality, stability, and so on. In addition, non-acidic lubricity additives posing less risk of corrosion to parts contacted by middle distillate fuel compositions and of reaction with basic components of fuel additive formulations

In one aspect, the term "hydrocarbyl" group is an alkenyl or alkyl group. The term "hydroxyamine" has general meaning encompassing either monohydroxyamine or polyhydroxyamine, such as dihydroxyamine, or mixtures thereof. Examples of useful hydrocarbyl succinic anhydride compounds include tridecylsuccinic anhydride, pentadecylsuccinic anhydride, tetradecenylsuccinic anhydride, hexadecenylsuccinic anhydride, dodecylsuccinic anhydride, tetradecylsuccinic anhydride, hexadecylsuccinic anhydride, octadecenylsuccinic anhydride, tetra propylene-substituted succinic anhydride, docosenylsuccinic anhydride, and mixtures thereof.

Examples of hydroxyamines include ethanolamine, diethanolamine, N-alkylethanolamines, N-alkenylethanolamines, N-alkylisopropanolamines, N-alkenylisopropanolamines, isopropanolamine, diisopropanolamine, tris(hydroxymethyl)aminomethane, 3-amino-1,2-propanediol, 2-amino-1,3-propanediol, and mixtures thereof, where the alkyl and alkenyl groups, when present, contain 1 to 12 carbon atoms. Other useful hydroxyamines include 3-amino-1-propanol, 4-amino-1-butanol, 5-amino-1-pentanol, 6-amino-1-hexanol, 4-aminophenol, their isomers, and mixtures thereof. Still another group of hydroxyamines have the hydroxyl group directly bonded to the nitrogen, such as hydroxylamine, and N-alkylhydroxya mines or N-alkenylhydroxyamines where the alkyl or alkenyl group may contain up to 12 carbon atoms.

Also useful are HSA-hydroxyamine compounds in which the free hydroxyl group has been allowed to react with epoxides such as ethylene oxide, propylene oxide, butylene oxide, glycidol, and the like. The molar ratio of hydrocarbyl-substituted succinic anhydride acylating agent to hydroxyamine can be from about 1:4 to about 4:1, and more preferably is from about 1:2 to about 2:1.

Typically, the concentration of the lubricity enhancing additive used in a middle distillate fuel composition falls in the range 10 to 1000 ppm, preferably 10 to 500 ppm, and more preferably from 25 to 250 ppm. When mixtures of additives are used the overall additive concentration falls within the typical range noted.

For the sake of convenience, the additives may be provided as a concentrate for dilution with fuel. Such a concentrate typically comprises from 99 to 1% by weight additive and from 1 to 99% by weight of solvent or diluent for the additive which solvent or diluent is miscible and/or capable of dissolving in the fuel in which the concentrate is to be used. The solvent or diluent may, of course, be the low sulfur fuel itself. However, examples of other solvents or diluents include white spirit, kerosene, alcohols (e.g., 2-ethyl hexanol, isopropanol and isodecanol), and high boiling point aromatic solvents (e.g., toluene, xylene). Cetane improvers (e.g., 2-ethylhexyl nitrate) may also be used as a solvent or diluent. Of course, these may be used alone or as mixtures.

Because the sustained conductivity benefit provided by the present embodiments exists in the presence of basic nitrogen, particular detergents (also known as dispersants) which can be used in the present invention include a basic nitrogen-containing detergent. Suitable ashless detergents/dispersants include amides, amines, polyetheramines, Mannich bases, succinimides (which are preferred). Metal-containing detergents are also effective. Mixtures and combinations of detergents may also be used, if desired.

These detergents/ dispersants are well known in the patent literature, mainly as additives for use in lubricant compositions, but their use in hydrocarbon fuels has also been described. Ashless dispersants leave little or no metal-containing residue on combustion. They generally contain only carbon, hydrogen, oxygen and in most cases nitrogen, but sometimes contain in addition other non-metallic elements such as phosphorus, sulphur or boron. A particularly useful ashless dispersant/detergent herein is derived from "high reactive" polyisobutylene (HR-PIB) substituted on a maleic anhydride reacted with a polyamine to achieve a level of about 5.4 % nitrogen to achieve enhanced dispersancy. Such a material is available from Afton Chemical Corporation as HiTEC® 9651; HiTEC® 4247, or HiTEC® 4249. The detergent/dispersant can be used in the fuel additive concentrates at levels of from about 5 to about 50% by weight, more preferably 10-30%.

In one preferred embodiment, the detergent is a succinimide, which has an average of at least 3 nitrogen atoms per molecule. The succinimide is preferably aliphatic and may be saturated or unsaturated, especially ethylenically unsaturated, e.g. an alkyl or alkenyl succinimide. Typically the detergent is formed from an alkyl or alkenyl succinic acylating agent, generally having at least 35 carbon atoms in the alkyl or alkenyl group, and an alkylene polyamine mixture having an average of at least 3 nitrogen atoms per molecule. In another embodiment the polyamine has 4 to 6 nitrogen atoms per molecule. Preferably it can be formed from a polyisobutenyl succinic acylating agent derived from polyisobutene having a number average molecular weight of 500 to 10,000 and an ethylene polyamine which can include cyclic and acyclic parts, having an average composition from triethylene tetramine to pentaethylene hexamine. Thus the chain will typically have a molecular weight from 500 to 2500, especially 750 to 1500 with those having molecular weights around 900 and 1300 being particularly useful although a succinimide with an aliphatic chain with a molecular weight of about 2100 is also useful. Further details can be found in US-A-5,932,525 and 6048373 and EP-A-432,941, 460309 and 1,237,373.

Examples of suitable metal-containing detergents useful herein include, but are not limited to, such substances as lithium phenates, sodium phenates, potassium phenates, calcium phenates, magnesium phenates, sulphurised lithium phenates, sulphurised sodium phenates, sulphurised potassium phenates, sulphurised calcium phenates, and sulphurised magnesium phenates wherein each aromatic group has one or more aliphatic groups to impart hydrocarbon solubility; the basic salts of any of the foregoing phenols or sulphurised phenols (often referred to as "overbased" phenates or "overbased sulphurised phenates"); lithium sultonates, sodium sulfonates, potassium sulfonates, calcium sulfonates, and magnesium sulfonates wherein each sulphonic acid moiety is attached to an aromatic nucleus which in turn usually contains one or more aliphatic substituents to impart hydrocarbon solubility; the basic salts of any of the foregoing sulfonates (often referred to as "overbased sulfonates"; lithium salicylates, sodium salicylates, potassium salicylates, calcium salicylates, and magnesium salicylates wherein the aromatic moiety is usually substituted by one or more aliphatic substituents to impart hydrocarbon solubility; the basic salts of any of the foregoing salicylates (often referred to as "overbased salicylates"), the lithium, sodium, potassium, calcium and magnesium salts of hydrolysed phosphosulphurised olefins having 10 to 2000 carbon atoms or of hydrolysed phosphosulphurised alcohols and/or aliphatic-substituted phenolic compounds having 10 to 2000 carbon atoms; lithium, sodium, potassium, calcium and magnesium salts of aliphatic carboxylic acids and aliphatic-substituted cycloaliphatic carboxylic acids; the basic salts of the foregoing carboxylic acids (often referred to as "overbased carboxylates" and many other similar alkali and alkaline earth metal salts of oil-soluble organic acids. Mixtures of salts of two or more different alkali and/or alkaline earth metals can be used. Likewise, salts of mixtures of two or more different acids or two or more different types of acids (e.g., one or more calcium phenates with one or more calcium sulfonates) can also be used. While rubidium, cesium and strontium salts are feasible, their expense renders them impractical for most uses.

Emulsions tend to form in fuels having detergents/dispersants, hence the need for the demulsifier. Any reaction which deactivates or reacts with the demulsifier reduces the demulsification efficacy, leading to more emulsification. Demulsifiers (or dehazers) herein can be any of the commercially available materials such as but not limited to alkoxylated phenol formaldehyde polymers, such as those commercially as NALCO^{™} 7007 (ex Nalco), and TOLAD^{™} 9310 and TOLAD^{™} 9372R (ex Baker Petrolite), alkylated phenols and resins derived therefrom, oxylated alkylphenolic resin, and formaldehyde polymer with 4-(1,1-dimethylethyl)phenol, methyloxirane and oxirane, ethoxylated EO/PO resin, polyglycol ester, ethylene oxide resin. The demulsifier can have a phosphorus level of greater than 30 mg/kg of demulsifier. However, it has been discovered that by reducing the phosphorus content of the demulsifier in the additive concentrate, the stability of the fuel additive concentrate and of the resulting fuel is greatly enhanced and a significant reduction in haze is obtained. Thus, a level of phosphorus in the demulsifier of no more than about 30 mg/kg is preferred.

The compositions and methods of the present embodiments are capable of providing conductivity to a fuel of at least 25 pS/m at the time and temperature of delivery. This conductivity is sufficient to meet the proposed new ASTM standard for conductivity in diesel fuels (ASTM D975 and amendments and appendices thereto) measured according to any appropriate test procedure, including but not limited to ASTM D2622 and ASTM D4951. This level of conductivity is obtained and sustained for extended periods of time by the present embodiments.

The term "sulfur-containing compounds" used herein connotes organo-sulfur compounds; including sulfone, polysulfone, linear and branched aliphatic or aromatic sulfonates, sulfates, sulfides, sulfurized alkenes, polyalkenes, sulfurized polyphenols, sulfonic acids, and salts thereof.

The term "substantially free" when used to in connection with a reference to "sulfur" indicates that the relevant compounds contribute no more than 2 ppm of sulfur to the fuel composition when measured according to, for example, ASTM D2622 or ASTM D4951. In particularly preferred embodiments the fuel composition contains preferably no more than 10 ppm of sulfur and most preferably no more than about 5 ppm of sulfur.

Antistatic agents that provide the sustained conductivity benefits of the present embodiments include certain acrylonitrile copolymers. Most preferably the antistatic agent comprises a blend of alkylacrylate nitrilo styrene polymer with a coco alkylamine. A particularly preferred antistatic agent is TOLAD^{™} 3512 available from Baker Petrolite

### EXAMPLES

The following examples illustrate but do not limit the present embodiments.

The following components were used in the Examples:
- A: Stadis® 425. A conductivity improver additive available from Innospec Fuel Specialties, LLC.
- B: TOLAD^{™} 3514. A conductivity improver available from Baker Petrolite
- C: TOLAD^{™} 3512. A conductivity improver available from Baker Petrolite.
- D: HiTEC® 4130SM. A modified version of HiTec® 4130S, which is a multi-functional fuel additive concentrate available from Afton Chemical. It comprises a succinimide detergent, an ester-based lubricity additive, a corrosion inhibitor, a demulsifier, aromatic solvents and alcohol cosolvent. HiTEC® 4130SM has a lower level of detergent as compared to the unmodified version (HiTEC® 4130S).

In each example, the HiTEC® 4130SM additive concentrate was added to an ultra-low diesel fuel available from ExxonMobil in an amount of 290 ppm. The additive concentrate contains a basic nitrogen component in the form of the succinimide detergent. Then, the antistatic agents were added at concentrations of 3, 5 or 8 ppm. The conductivity was determined using ASTM D2624 after initially adding the antistatic agent to the fuel. The samples were then stored at 50°C to accelerate the loss of conductivity and conductivity was measured periodically over several weeks. The results are reported in Table 1. The data from the examples (except the controls) is graphically illustrated in Figure 1. In Fig. 1, the curves are labeled A3, A5, A8, B3, etc. which corresponds to the antistatic agent used and its concentration as reported in Table 1.

As mentioned above, the conductivity benefit provided by the present embodiments is a sustained benefit. This sustained benefit is surprising and unexpected. With reference to Table 1 and Figure 1, it can be seen that for the samples containing Stadis® 425 or TOLAD^{™} 3514, the conductivity dissipated quite rapidly with a loss in conductivity of at least 50% within 3 days. In contrast, the samples containing TOLAD^{™} 3512 maintained a relatively constant conductivity over an extended period of time.

This surprising and unexpected discovery will enable the antistatic agent to be pre-blended with an additive concentrate, even those containing a basic nitrogen component, for extended periods prior to adding the additive concentrate to the fuel, and still provide a conductivity improvement to the fuel composition.

While particular embodiments have been described, alternatives, modifications, variations, improvements, and substantial equivalents that are or can be presently unforeseen can arise to applicants or others skilled in the art. Accordingly, the appended claims as filed and as they can be amended are intended to embrace all such alternatives, modifications variations, improvements, and substantial equivalents.

**TABLE 1**

| **CONDUCTIVITY (pS/m)** | | | | | | | | | | | | | |
|---|---|---|---|---|---|---|---|---|---|---|---|---|---|
| | Controls (ppm) | | | | Comparative Examples | | | | | | | | |
| | | | | | A (ppm) | | | B (ppm) | | | C (ppm) | | |
| Day | A (3) | B (3) | C (3) | D (290) | 3 | 5 | 8 | 3 | 5 | 8 | 3 | 5 | 8 |
| 0 | 455 | 330 | 144 | 8 | 275 | 404 | 610 | 275 | 470 | 785 | 92 | 155 | 240 |
| 3 | 440 | 290 | 127 | 7 | 22 | 44 | 87 | 72 | 144 | 335 | 90 | 152 | 246 |
| 4 | | | | | 19 | 29 | 59 | 55 | 102 | 233 | 88 | 137 | 230 |
| 5 | | | | | 12 | 25 | 49 | 50 | 86 | 185 | 90 | 135 | 225 |
| 6 | | | | | 9 | 20 | 39 | 46+ | 74 | 145 | 88 | 133 | 213 |
| 12 | | | | | 9 | 13 | 18 | 43 | 62 | 92 | 84 | 132 | 217 |
| 19 | | | | | | | | 44 | 58 | 82 | 73 | 137 | 192 |
| 26 | | | | | | | | 12 | 58 | 78 | 73 | 114 | 192 |
| 33 | | | | | | | | 40 | 58 | 71 | 84 | 107 | 172 |
| 40 | | | | | | | | 44 | 57 | 76 | 66 | 108 | 158 |
| 49 | | | | | | | | 42 | 66 | 78 | 69 | 114 | 189 |
| 54 | | | | | | | | 42 | 57 | 80 | 64 | 104 | 166 |

## Claims

1. A composition comprising an additive concentrate comprising a basic nitrogen component pre-blended with an antistatic agent.

2. Use of the concentrate of claim 1 in a middle distillate fuel composition to provide a sustained conductivity benefit to a middle distillate fuel composition.

3. A composition comprising a middle distillate fuel comprising a basic nitrogen component and an antistatic agent, wherein the conductivity of said fuel composition declines by no more than 50% over a period of 3 days when stored at 50°C.

4. The composition of claim 3, wherein said conductivity declines by no more than 50% over a period of 5 days when stored at 50°C.

5. The composition of any of claims 2-4, wherein said fuel comprises a diesel fuel.

6. The composition of any of claims 2-5, wherein said diesel fuel contains no more than 15 ppm of sulfur.

7. The composition of any of claims 2-6, wherein said fuel comprises a biodiesel.

8. The composition of any of the preceding claims, wherein the basic nitrogen component comprises succinimide detergent.

9. The composition of any of the preceding claims, wherein said composition is substantially free of sulfone compunds, sulfonic acid compounds and salts thereof.

10. A method comprising the step of adding an antistatic agent to a middle distillate fuel composition, wherein the conductivity in said fuel composition declines by no more than 50% over a period of 3 days when stored at 50°C.

11. The method of claim 10, wherein said fuel comprises a diesel fuel.

12. The method of claim 11 wherein said diesel fuel contains no more than 15 ppm of sulfur.

13. The method of any of claims 10-12, wherein said fuel comprises a biodiesel.

14. The method of any of claims 10-13, wherein the basic nitrogen component comprises succinimide detergent.

15. The method of any of claims 10-14, further comprising the step of dispensing the fuel composition.
